Europäisches Patentamt

European Patent Office

Office européen des brevets

(11) Publication number: **0 313 124 B1**

## EUROPEAN PATENT SPECIFICATION

(45) Date of publication of patent specification: **17.06.92**   (51) Int. Cl.⁵: **B65H 29/58**

(21) Application number: **88202051.4**

(22) Date of filing: **20.09.88**

(54) A device for conveying sheets.

(30) Priority: **23.09.87 NL 8702263**

(43) Date of publication of application:
**26.04.89 Bulletin 89/17**

(45) Publication of the grant of the patent:
**17.06.92 Bulletin 92/25**

(84) Designated Contracting States:
**DE FR GB IT NL**

(56) References cited:

**PATENT ABSTRACTS OF JAPAN, vol. 8, no. 47 (M-280)[1484], 2nd March 1984; & JP-A-58 202 247 (FUJI XEROX K.K.) 25-11-1983**

**PATENT ABSTRACTS OF JAPAN, vol. 9, no. 187 (M-401)[1910], 3rd August 1985; & JP-A-60 52 458 (FUJI XEROX K.K.) 25-03-1985**

(73) Proprietor: **Océ-Nederland B.V.
St. Urbanusweg 43
NL-5914 CC Venlo(NL)**

(72) Inventor: **Clabbers, Wilhelmus Gertrudis Maria
Helbeek 119
NL-5911 CW Venlo(NL)**
Inventor: **Dinnissen, Johannes Hubertus Antonius
Byronstraat 64
NL-5924 XN Venlo(NL)**
Inventor: **Nabuurs, Johannes Herman Bonifatius
Waterleidingsingel 55
NL-5915 VT Venlo(NL)**

(74) Representative: **Hanneman, Henri W.A.M. et al
Océ-Nederland B.V. Patents and Information
Postbus 101
NL-5900 MA Venlo(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to a device for conveying sheets, provided with a system of path-guides, in which a plurality of path-guides form a first and a second conveyor path, said conveyor paths intersect and each conveyor path comprises a feed section and a discharge section situated on either side of the intersection and provided with a guide member which can be set to two positions at the intersection and in one of the positions keeps open the entrance to the first discharge section and at the same time blocks the entrance to the second discharge section, and in the other position blocks the entrance to the first discharge section and keeps open the entrance to the second discharge section.

Devices having intersecting conveyor paths are known and are used inter alia in copying machines in order to feed originals or copies to or from processing stations (see for example US Patent 3 331 276 and UK Patent 1 397 605).
One disadvantage of these known devices which do not have any guide elements at the intersection, is that a sheet, particularly if limp or curled or damaged at the front edge, may stick in the intersection or take the wrong path and thus cause malfunctioning.

It is also known to provide sheet guides with switches by means of which sheets can optionally be directed to one or other direction, and it is also known to combine a number of such features in order to form a system of intersecting conveyor paths (see for example West German Offenlegungsschrift 29 12 648 and 33 41 413). To obtain a reliably operating device in this way, however, a number of switches and other auxiliaries are required and also an extensive control and monitoring system so that the entire arrangement becomes complex and expensive and unattractive for practical use.

Japanese Patent Application 58-202247 uses at the intersection of conveyor paths a cylindrical element having a slot of an arc of a circle extending over the width as a guide. By rotating the cylinder, the location of the arced slot is changed and thus the direction of the conveyor paths.

Japanese Patent Application 60-52458 discloses a sheet inverter havig a guide element with a slot which guide element can be turned through 90° between a first and a second position. In the first position, a sheet can be guided by an outer side of the guide element from a feed section into a first inverter. By turning the element 90° to the second position, the sheet can be guided by said outer side from the first inverter to a discharge section while at the same time a second sheet can be guided by another outer side of the guide element from the feed section to a second inverter. In an intermediate position of 45°, a sheet can be guided through the slot directed from the feed section to the discharge section.

The problem with guide elements having slots as shown in these Japanese Patent Applications is that they still may be blocked, especially if the sheet is limp, curled or damaged at the front edge.

The object of the invention is to obviate the above disadvantages and, using a minimum of parts, provide a compact, cheap and reliably operating device of the kind in question. This object is attained in a device of the kind referred to in the preamble in that the guide element consists inter alia of a slidable element which extends over the working width of the device and which comprises at least two adjoining sides, the one side forming part of the guides of the first conveyor path and the second side forming part of the guides of the second conveyor path, and in the one position of the guide element the second side adjoining the associated path-guide to block the entrance to the second discharge section and in the other position of the guide element the first side adjoining the associated path-guide to block the entrance to the first discharge section.
Since only a slidable guide element is provided, simple means, such as a combination of an electromagnet and a spring, can be used for moving it from one position to the other and back, thereby always guiding a sheet coming from a feed section to the associated discharge section of a conveyor path, whereby the blocking makes it impossible for the sheet to enter the discharge section of the other conveyor path.
In another embodiment of a device according to the invention the guide element comprises a third side forming part of the guides of a third conveyor path which does not run via the intersection and which is connected to one part of each of the intersecting conveyor paths, in the one position of the guide element the entrance to the other part of the second conveyor path being blocked and in the other position of the guide element the entrance to the other part of the first conveyor path being blocked.

The invention will be explained in detail with reference to the accompanying drawings in which:
Fig. 1 is a diagram of a feed device for originals, combined with an inverter.
Figs. 2 and 3 each represent an enlarged detail of the intersection of the conveyor paths from Fig. 1 the intersection being made in accordance with the prior art mentioned hereinbefore.
Fig. 4a represents the one position and Fig. 4b the other position of embodiments of the present invention.

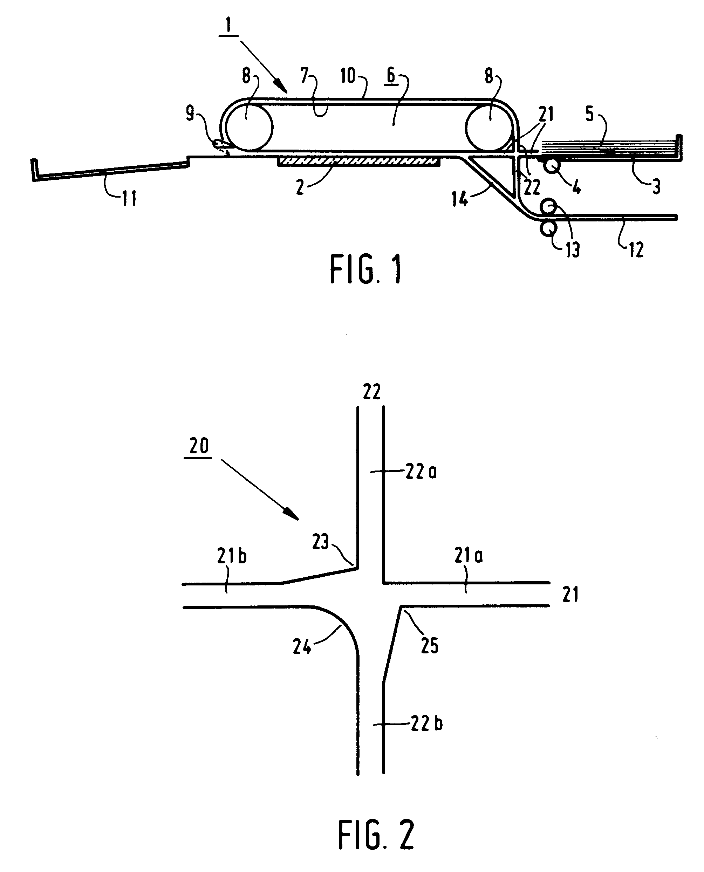

Fig. 1 diagrammatically illustrates a device 1, in which it is possible in simple manner to use in a copying machine originals which are printed on both one side and both sides. The device 1 comprises an exposure platen 2, a stock tray 3 with a separating mechanism 4, a conveyor device 6, consisting inter alia of an endless belt 7 trained about and driven by rollers 8, and a switch 9 which can be set to two positions, a receiving tray 11, and an inverter 12 with drive rollers 13. If the originals for copying are printed on only one side, they are placed in the stock tray 3 with the printed side down. The originals are taken one by one from beneath the pile 5 by a separating mechanism 4, which comprises a friction roller for example, and are fed via conveyor path 21 to conveyor device 6. The endless belt 7, which is always driven in one direction by the rollers 8, conveys the original taken from the pile to the exposure platen 2, upon which the original is stopped in order to be exposed the required number of times. Belt 7 then conveys the original on to the receiving tray 11, since switch 9 is in its first position, in which the originals go direct from the conveyor device 6 to the receiving tray 11.

When it is required to copy originals which are printed on both sides, they are placed with the front side down in the stock tray 3. Separating mechanism 4 takes an original from beneath the pile 5 and feeds it to conveyor device 6 via conveyor path 21, endless belt 7 then taking over the conveyance and stopping the original for the required number of exposures on the exposure platen 2 with the front side downwards. Switch 9 is then set to the second position so that belt 7 feeds the original via a return path 10 and conveyor path 22 to inverter 12, which is situated beneath the stock tray 3. The conveyor path 22 thus intersects the conveyor path 21. Drive rollers 13 feed the original completely into the inverter. By reversing the direction of the drive of the drive rollers 13 the original is then discharged from the inverter 12, the back of the original now being situated downwards, and conveyed to conveyor device 6 via conveyor path 14. Endless belt 7 then takes over conveyance and stops the original on the exposure platen 2, where the back of the original is exposed the required number of times. Belt 7 then conveys the original on to the receiving tray 11, after switch 9 has been returned to the first position. The control for the device 1 is so constructed that two or more originals can be in progress simultaneously in the device 1.

Fig. 2 diagrammatically represents an intersection 20 of conveyor paths 21 and 22 according to a known construction, which could be used in the device according to Fig. 1. The intersection divides the conveyor path 21 or 22 respectively into a feed section 21a or 22a respectively and a discharge section 21b or 22b respectively. To obviate any malfunction, the guides are bent back slightly at the corners 23,24,25 of the discharge sections 21b and 22b so that the sheets coming from the feed section can be received more satisfactorily. However such a step is not adequate. Sheets which are too limp or damaged at the front edge may stick in the intersection or enter the feed or discharge section of the other conveyor path.

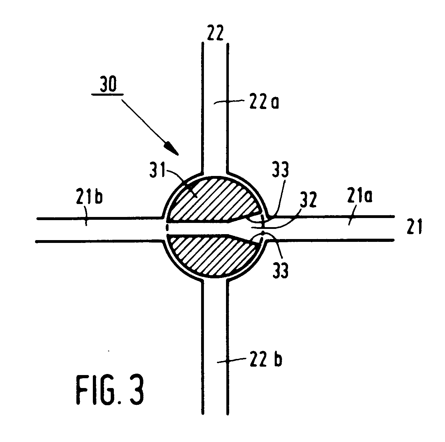

An embodiment of an intersection known from JP-58-202247 is represented diagrammatically in Fig. 3. It comprises a cylindrical element 31 rotatable about its axis and having a slot 32 disposed diametrically over the working width of the device. Malfunctions of the kind referred to with respect to Fig. 2 can be obviated by bending back the side walls 33 of the slot 32 which form the guides at the intersection 30 slightly at the side of the feed section 21a of the conveyor path 21 with respect to the guides of the conveyor path 21, so that the sheets are not obstructed at the transition from the guides of the feed section to the guides of the guide element. For the same reason, the side walls 33 are bent inwards slightly at the discharge section side. The cylindrical element 31 can be turned from this described position to the position in which the slot 32 forms the connection between the feed section 22a and the discharge section 22b of conveyor path 22, the same description applying to the construction, and can then be turned back into the first-described position.

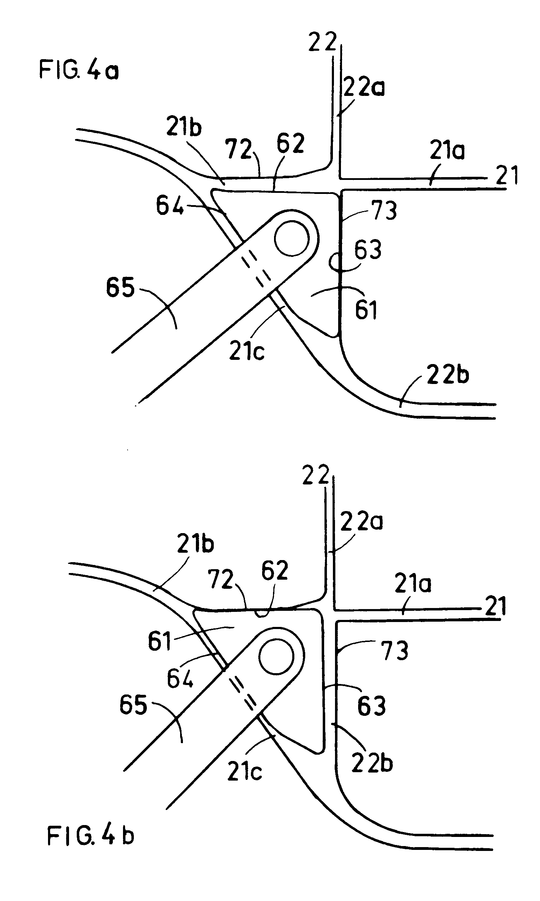

Figs. 4a and 4b represent an embodiment of an intersection according to the invention. It comprises an element 61 extending over the working width of the device, said element having at least two adjoining sides 62 and 63 and being slidable into each of two positions. The first side 62 forms part of the guides of the first conveyor path 21 and the second side 63 forms part of the guides of the second conveyor path 22. Fig. 4a represents the one position of the element 61. The second side 63 is adjoining the associated path-guide 73 to block the entrance to the second discharge section 22b. In consequence a guide has been provided in the first conveyor path at the intersection to guide sheets coming from the feed section 21a into the discharge section 21b. In the other position, represented in Fig. 4b, the first side 62 of the element 61 is adjoining the associated path-guide 72, thus blocking the entrance to the first discharge section 21b and providing a guide in the second conveyor path at the intersection.

Each side 62,63 of the guide element may have a shape equal to the shape of the associated guide 72,73 as a result of which each side 62,63 can be contiguous to the associated path-guide 72,73.

In a further embodiment, also represented in the Figs. 4a and 4b, the guide-element 61 comprises a third side 64 forming part of the guides of a third conveyor path 21c which does not run via the intersection. This third conveyor path 21c is connected to parts of both the conveyor paths 21 and 22 running via the intersection.

The one part of the second conveyor path may comprise an inverter, in which the movement of sheets is reversed. A sheet can be conveyed to the inverter via conveyor path 22, when the guide-element 61 has been set into the other position (Fig. 4b). After that the guide-element 61 is set in the one position (Fig. 4a). As a result the other part of the second conveyor path 22 is blocked, so that the sheet can be conveyed unobstructedly to the one part of the first conveyor path 21 via the third conveyor path 21c. When the guide-element 61 has been set into the other position and consequently the entrance to the other part of the first conveyor path 21 is blocked, a sheet can be conveyed unobstructedly from the one part of the first conveyor path 21 to the one part of the second conveyor path 22 via the third conveyor part 21c.

## Claims

1. A device for conveying sheets, provided with a system of path-guides, in which a plurality of path-guides form a first (21) and a second (22) conveyor path, said conveyor paths (21, 22) intersect and each conveyor path (21, 22) comprises a feed section (21a and 22a respectively) and a discharge section (21b and 22b respectively) situated on either side of the intersection, and provided with a guide member (61) which can be set to two positions at the intersection and in one of the positions keeps open the entrance to the first discharge section (21b) and at the same time blocks the entrance to the second discharge section (22b), and in the other position blocks the entrance to the first discharge section (21b) and keeps open the entrance to the second discharge section (22b), characterised in that the guide element (61) consists inter alia of a slidable element (61) which extends over the working width of the device and comprises at least two adjoining sides (62,63), the first side (62) forming part of the guides of the first conveyor path (21) and the second side (63) forming part of the guides of the second conveyor path (22), and in the one position of the guide-element the second side (63) being adjoined to an associated path-guide (73) and blocking the entrance to the second discharge section (22b) and in the other position of the guide-element the first side (62) being adjoined to an associated path-guide (72) and blocking the entrance to the first discharge section (21b).

2. A device according to claim 1, characterised in that the sides (62,63) of the guide-element (61) are contiguous to the associated path-guides (72,73).

3. A device according to claim 1 or 2, characterised in that the slidable element (61) comprises a third side (64) forming part of the guides of a third conveyor path (21c), which does not run via the intersection and which is connected to parts of both the intersecting conveyor paths (21,22), in the one position of the guide element (61) the entrance to the other part of the second conveyor path (22) being blocked and in the other position of the guide element the entrance to the other part of the first conveyor path (21) being blocked.

## Revendications

1. Dispositif pour transporter des feuilles, pourvu, d'une part, d'un système de guides de trajectoire, dans lequel plusieurs guides de trajectoire forment une première trajectoire de transport (21) et une seconde trajectoire de transport (22), ces trajectoires (21, 22) de transport se coupant et chaque trajectoire (21, 22) de transport comprenant une section d'introduction (respectivement 21a et 22a) et une section d'évacuation (respectivement 21b et 22b) situées de part et d'autre de l'intersection, et pourvu, d'autre part, d'une pièce de guidage (61) qui peut être placée, à l'endroit de l'intersection, dans deux positions dans une première desquelles il maintient ouverte l'entrée de la première section d'évacuation (21b) et en même temps bloque l'entrée de la seconde section d'évacuation (22b), tandis que, dans l'autre position, il bloque l'entrée de la première section d'évacuation (21b) et maintient ouverte l'entrée de la seconde section d'évacuation (22b), caractérisé en ce que l'élément de guidage (61) consiste, entre autres, d'un élément coulissant (61) qui s'étend sur toute la largeur de travail du dispositif et comprend au moins deux faces adjacentes (62, 63), la première face (62) faisant partie des guides de la première trajectoire de transport (21) et la seconde face (63) faisant partie des guides de la seconde trajectoire de transport (22) et en ce que, dans la première position de l'élément de guidage, la seconde face (63) est jointe à un guide de trajectoire (73) associé et bloque l'entrée de la seconde section d'évacuation (22b), tandis que, dans l'autre position de l'élément de guidage, la première face (62) est jointe à un guide de trajectoire (72) associé et bloque l'entrée de la première section d'évacuation (21b).

2. Dispositif suivant la revendication 1, caractérisé en ce que les faces (62, 63) de l'élément de guidage (61) sont contiguës aux guides de trajectoire (72, 73) associés.

3. Dispositif suivant la revendication 1 ou 2, caractérisé en ce que l'élément coulissant (61) comporte une troisième face (64) faisant partie des guides d'une troisième trajectoire de transport (21c), qui ne passe pas par l'intersection et qui est reliée à des parties de l'une et l'autre des deux trajectoires de transport (21, 22) se coupant, tandis que, dans la première position de l'élément de guidage (61), l'entrée conduisant à l'autre partie de la seconde trajectoire de transport (22) est bloquée et que, dans l'autre position de l'élément de guidage, l'entrée conduisant à l'autre partie de la première trajectoire de transport (21) est bloquée.

**Patentansprüche**

1. Vorrichtung zum Transportieren von Bögen, mit einem System von Bahnführungen, bei dem mehrere Bahnführungen eine erste (21) und eine zweite (22) Transportbahn bilden, welche Transportbahnen (21, 22) sich schneiden und jeweils einen Zufuhrabschnitt (21a bzw. 22a) und einen Ausgabeabschnitt (21b bzw. 22b) beiderseits der Schnittstelle aufweisen, und mit einem Führungsteil (61), das in zwei Positionen an der Schnittstelle einstellbar ist und in einer dieser Positionen den Einlaß in den ersten Ausgabeabschnitt (21b) offenhält und gleichzeitig den Einlaß in den zweiten Ausgabeabschnitt (22b) blockiert und in der anderen Position den Einlaß in den ersten Ausgabeabschnitt (21b) blockiert und den Einlaß in den zweiten Ausgabeabschnitt (22b) offenhält, dadurch **gekennzeichnet,** daß das Führungselement (61) unter anderem aus einem verschiebbaren Element (61) besteht, daß sich über die Arbeitsbreite der Vorrichtung erstreckt und wenigstens zwei aneinandergrenzende Seiten (62, 63) aufweist, wobei die erste Seite (62) Teil der Führungen der ersten Transportbahn (21) und die zweite Seite (63) Teil der Führungen der zweiten Transportbahn (22) ist und in der einen Position des Führungselements die zweite Seite (63) an eine zugehörige Bahnführung (73) anschließt und den Einlaß in den zweiten Ausgabeabschnitt (22b) blockiert und in der anderen Stellung des Führungselements die erste Seite (62) an eine zugehörige Bahnführung (72) anschließt und den Einlaß in den ersten Ausgabeabschnitt (21b) blockiert.

2. Vorrichtung nach Anspruch 1, dadurch **gekennzeichnet,** daß die Seiten (62, 63) des Führungselements (61) an die zugehörigen Bahnführungen (72, 73) angepaßt sind.

3. Vorrichtung nach Anspruch 1 oder 2, dadurch **gekennzeichnet,** daß das verschiebbare Element (61) eine dritte Seite (64) aufweist, die Teil der Führungen einer dritten Transportbahn (21c) ist, die nicht durch die Schnittstelle verläuft und die mit Teilen von beiden einander schneidenden Transportbahnen (21, 22) verbunden ist, wobei in der einen Position des Führungselements (61) der Einlaß in den anderen Teil der zweiten Transportbahn (22) blockiert ist und in der anderen Position des Führungselements der Einlaß in den anderen Teil der ersten Transportbahn (21) blockiert ist.

FIG. 1

FIG. 2

FIG. 3

FIG. 4 a

FIG. 4 b